# DEMANDE DE BREVET EUROPEEN

(11) **EP 1 387 155 A1**
(43) Date de publication de la demande: **04.02.2004**
(21) Numéro de dépôt: 03291872.4
(22) Date de dépôt: 29.07.2003
(51) Int. Cl.: G01K 7/13, G01K 7/02

(54) **Connecteur miniature avec électronique embarquée pour thermocouple**

(30) Priorité: 30.07.2002 FR 0209687
(71) Demandeur: Demeocq, Etienne, 58470 Magny-Cours (FR)
(72) Inventeur: Demeocq, Etienne, 58000 Nevers (FR)
(74) Mandataire: Debay, Yves

(57) **Abrégé**

La présente invention concerne un connecteur miniature avec l'électronique embarquée pour thermocouple, caractérisé en ce qu'il incorpore :
- deux moyens de connexion (20, 21) d'un thermocouple (1) à un circuit imprimé (4) reliant les éléments de l'électronique embarquée ;
- trois moyens de connexion (230, 231, 232) des circuits imprimés (4) à un câble (3) d'alimentation du connecteur et de transfert du signal mis en forme par l'électronique embarquée ;
- des moyens (24) de mesure de la température ambiante dans le connecteur disposés entre les deux moyens de connexion (20, 21) du thermocouple ;
- des moyens (25, 26, 27, 29) d'amplification du signal délivré par le thermocouple (1) et de mise à l'échelle du signal délivré par le moyen de mesure de la température ambiante (24), ces moyens (25, 26, 27, 29) effectuant également la sommation de ces deux signaux ainsi que la linéarisation du signal résultant de cette sommation.

## Description

La présente invention concerne un connecteur miniature avec électronique embarquée pour thermocouple.

Il est connu des systèmes thermocouples, tels que par exemple dans le brevet US 4,448,824, incorporant un système de thermocouple dont les signaux sont envoyés sur un amplificateur. Ces signaux sont combinés avec un signal d'indication de la température ambiante fournie par une diode Zéner, le signal résultant étant envoyé sur un affichage. Toutefois, ces schémas de principe ne permettent pas de connaître la répartition des différents éléments et nécessitent le montage d'un semi-conducteur couplé à un élément d'inertie thermo-ionique, constitué de deux corps de même métal conducteur, disposés en vis-à-vis et séparés par une mince couche de matériau isolant électriquement mais conducteur thermiquement. Un tel système de compensation de soudure froide est complexe à produire et peut difficilement s'intégrer dans un connecteur miniature. En général, des circuits d'amplification et de traitement de la mesure sont éloignés du thermocouple lui-même.

Il est également connu par la demande de brevet français 2 762 908, un boîtier de connexion pour thermocouple comportant deux moyens de connexion (10) pour un tel thermocouple avec protection contre les parasites électromagnétiques et deux moyens de connexion de sortie. Le boîtier incorpore une alimentation par piles et un amplificateur de sortie effectue la sommation du signal fourni par l'amplificateur de thermocouple, le détecteur de température locale et une tension de correction, comme cela est représenté à la figure 3 de ce document. Ce dispositif nécessite en plus des potentiomètres de réglage, ce qui implique une mise au point difficile et une possibilité de dérèglement des potentiomètres en cours d'usage. De plus, la taille du boîtier est plus importante du fait que le dispositif incorpore, pour son auto-alimentation, une pile au lithium, un commutateur, une pompe à charge et un microprocesseur de gestion de l'ensemble des différents éléments ainsi qu'un système d'affichage à diodes électroluminescentes.

Un tel dispositif est donc plus gros, plus complexe à produire et plus difficile à régler.

Un autre dispositif est enseigné par le brevet US 4,133,700 et constitue un connecteur de plus petite dimension que le précédent, ce connecteur pour thermocouple étant auto-alimenté et fonctionnant sur le principe d'un pont de Wheatstone incorporant des thermistors dans ses branches pour mesurer localement de la température et réaliser une compensation de soudure froide par rapport au signal fourni par le thermocouple. Toutefois, un tel dispositif ne comprend pas de moyens d'assurer le traitement et l'amplification du signal avant son envoi vers le moyen de mesure, ce qui peut générer des résultats erronés par défaut de détection suite à un manque d'amplification. Par ailleurs le dispositif, comme le précédent, étant auto-alimenté, l'absence de mesure peut également résulter de l'épuisement de la source d'alimentation.

Le but de l'invention est donc de proposer un dispositif de connexion à amplification pour thermocouple de très faible dimension et intégrant plusieurs fonctions électroniques, permettant son alimentation par le câble recevant les mesures du thermocouple, pour déporter suffisamment loin le système de traitement de la mesure.

Ce but est atteint par le fait que le connecteur miniature avec l'électronique embarquée pour thermocouple est caractérisé en ce qu'il est constitué d'un boîtier dans lequel sont agencés :
- deux moyens de connexion d'un thermocouple à un circuit imprimé reliant les éléments de l'électronique embarquée ;
- trois bornes de connexion de circuit imprimé à un câble d'alimentation du connecteur et de transfert du signal mis en forme par l'électronique embarquée ;
- des moyens de mesure de la température ambiante dans le connecteur disposés entre les deux moyens de connexion du thermocouple ;
- des moyens d'amplification du signal délivré par le thermocouple et de mise à l'échelle du signal délivré par le moyen de mesure de la température ambiante, ces moyens effectuant également la sommation de ces deux signaux ainsi que la linéarisation du signal résultant de cette sommation.

Selon une autre particularité, les moyens de mise en forme sont constitués d'un amplificateur différentiel à très faible valeur de décalage et très faible dérive, dont chacune des entrées est reliée au premier et second moyens de connexion et dont la sortie est reliée par le circuit imprimé à une entrée d'un circuit de sommation recevant sur son autre entrée la sortie d'un circuit de mise à l'échelle du signal délivré par la sortie du capteur de température ambiante, la sortie du circuit sommateur étant reliée à l'entrée d'un circuit de linéarisation dont la sortie est reliée à l'un des moyens de connexion du câble.

Selon une autre particularité, un deuxième moyen de connexion du câble est relié à un régulateur de tension qui alimente par les pistes les circuits embarqués dans le connecteur.

Selon une autre particularité, le boîtier a une longueur inférieure à 30 mm, une largeur inférieure à 20 mm et une épaisseur inférieure à 10 mm.

Selon une autre particularité, le thermocouple de type K est constitué d'un fil d'alliage chromel relié à un fil d'alliage alumel pour constituer une soudure chaude, la liaison de ces deux fils, respectivement aux premier et second moyens de connexion avec le cuivre du circuit imprimé constitue une soudure froide.

D'autres caractéristiques et avantages de la présente invention apparaîtront plus clairement à la lecture de la description ci-après, faite en référence aux dessins annexés, dans lesquels :
- la figure 1 représente un schéma des circuits implantés dans le connecteur selon l'invention ;
- la figure 2a représente une vue du dessus du connecteur miniature selon l'invention, le capot enlevé ;
- la figure 2b représente une vue de côté du connecteur miniature avec son capot.

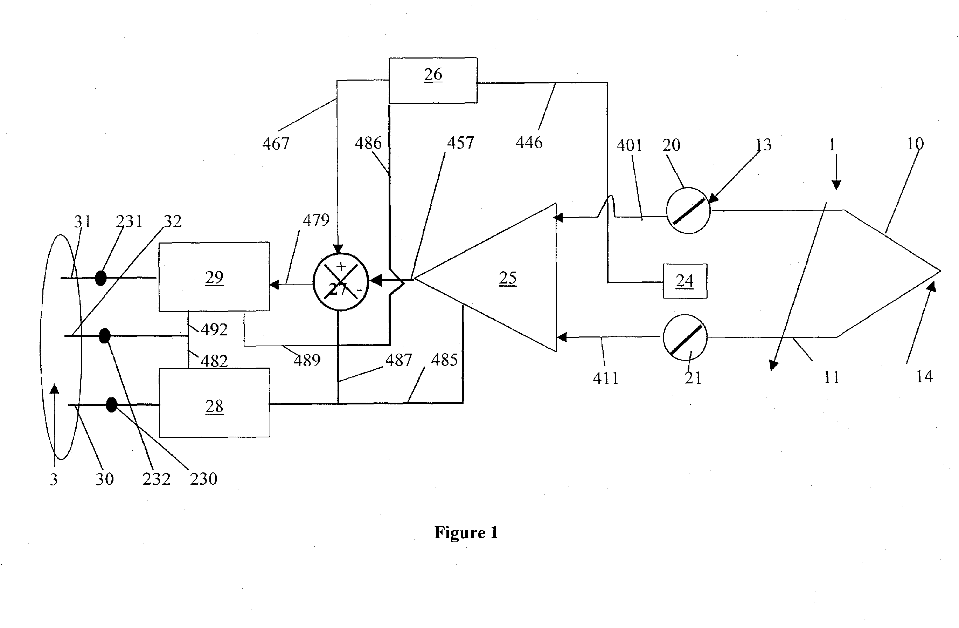

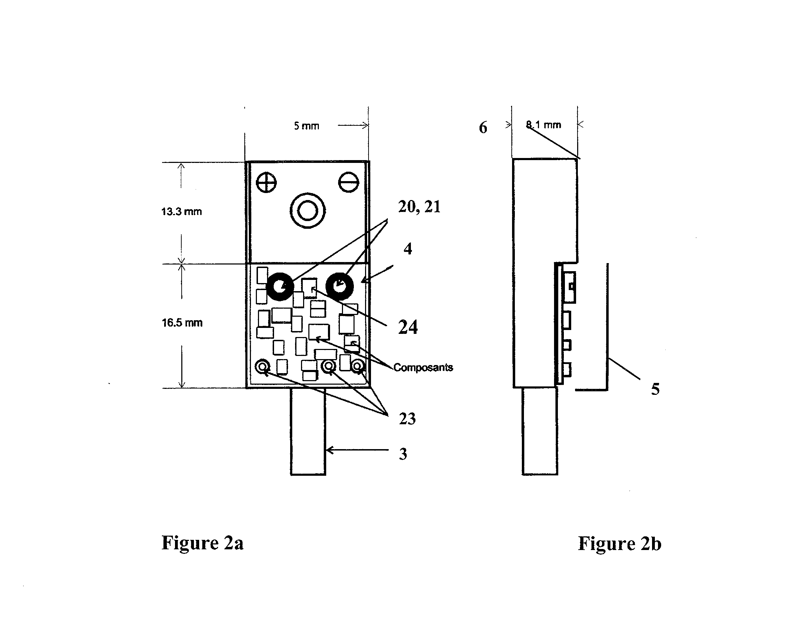

La présente invention sera décrite en liaison avec les figures 1 et 2. L'invention est décrite par rapport à une utilisation avec un thermocouple de type K, mais elle peut tout aussi bien s'utiliser avec tout type de thermocouple. Le connecteur miniature, représenté à la figure 2, est incorporé dans un boîtier (6) dont un capot amovible (5) vient se fixer au dessus des composants électroniques et du circuit imprimé (4). Le circuit imprimé (4) établit les liaisons entre les composants électroniques et les moyens de connexion (20, 21, 23), selon le schéma de câblage représenté à la figure 1. Le thermocouple de type K, par exemple, est constitué d'un fil d'alliage chromel (10) et d'un fil d'alliage alumel (11) reliés ensemble à une extrémité par une soudure appelée "soudure chaude" (14). Cette soudure chaude (14) est placée à l'endroit où l'on veut mesurer la température. Les deux fils (11, 10) sont reliés séparément à l'autre extrémité dans un connecteur miniature mâle. Ce connecteur mâle se broche dans le connecteur femelle respectif (21, 20) fixé au circuit imprimé. Ces deux connecteurs ne sont pas représentés sur le schéma de principe de la figure 1, car les métaux utilisés dans ces connecteurs sont identiques à ceux du thermocouple et tout se passe comme si les fils d'alliage chromel et alumel étaient directement connectés respectivement aux premier (20) et second (21) moyens de connexion. Ces deux connexions chromel-cuivre puis cuivre-alumel, qui relient le thermocouple aux pistes en cuivre du circuit imprimé forment ce que l'on appele la "soudure froide". Les pistes (401, 411) du circuit imprimé relient le s de connexion (20, 21) à un amplificateur différentiel (25), alimenté par une piste de connexion (485) à un circuit d'alimentation et de régulation de la tension (28) reçue sur les deux fils (30, 32) du câble (3), par une première et seconde bornes de connexion (230, 232), la seconde borne de connexion (232) constituant la masse qui est reliée aux différents circuits par les pistes (482, 492). Entre les premier et second moyens de connexion (20, 21) du thermocouple (1) est placé un circuit capteur (24) de température ambiante permettant de mesurer la température régnant au niveau du connecteur, ce capteur envoyant par la piste (446) un signal vers un circuit de mise à l'échelle (26), lequel envoie par la piste (467) le signal traité vers un circuit sommateur (27) recevant sur une autre entrée la sortie d'un amplificateur différentiel (25) par la piste (457). La sortie du circuit sommateur est envoyée par la piste (479) sur un circuit de linéarisation (29) du signal généré par le thermocouple et le compensateur de soudure froide. Ce circuit de linéarisation (29) délivre sur une troisième borne de connexion (231) un signal qui est envoyé par le fil (31) du câble (3) vers un appareil de mesure éloigné du connecteur miniature. Le circuit (26) d'adaptation d'échelle permet de mettre à la même échelle le signal provenant du capteur et le signal thermocouple amplifié, en suivant la meilleure pente du thermocouple dans la gamme de température ambiante d'utilisation du connecteur. Ceci permet de travailler dans une température ambiante de 0° à 100°, sans dégradation des caractéristiques et des signaux délivrés par le connecteur, et permet donc de placer le connecteur près de la mesure de température. Le circuit de linéarisation (29) est un circuit analogique à pentes multiples permettant de corriger par exemple la mesure de température négative obtenue par un thermocouple de type K constitué de chromel et d'alumel.

Comme la soudure dite chaude du thermocouple est destinée à mesurer la température en générant une force électromotrice « f.e.m» à la jonction de matériaux conducteurs différents et que cette tension est très faible, il est important de pouvoir l'amplifier dès le départ. Par ailleurs l'amplificateur étant placé à proximité de la position de mesure, il est important de connaître, par une mesure de la température ambiante, la température de la soudure froide (13) du thermocouple, car la température mesurée est la différence entre la température à l'extrémité de la sonde (14) et la température ambiante au niveau de la soudure froide (13). En incluant le capteur de température (24) le plus près possible de la soudure froide, on permet, en ajoutant la température ambiante à la température mesurée, une compensation plus précise de la mesure de température de soudure froide. Le connecteur ainsi développé permet également d'effectuer la jonction avec un appareil de mesure par un câble ordinaire à trois fils, sans nécessiter de liaison spéciale. Le capteur de température (24) peut être de bonne précision et mesurer la température ambiante au niveau des vis (20,21) qui relient les languettes du connecteur thermocouple au cuivre du circuit imprimé (4). Le circuit de mise à l'échelle (26) permet d'adapter la mesure effectuée au signal fourni par le thermocouple sans avoir à utiliser de potentiomètre. Enfin, le circuit régulateur de tension (28) fournit une alimentation en tension des différents circuits du connecteur, dans une plage de tension comprise entre 5V et 16V.

Les composants nécessaires à la protection contre les interférences électromagnétiques sont également incorporés dans le connecteur et sont constitués par des ferrites placées sur les fils (231 et 230) et des condensateurs céramiques entre ces mêmes fils et la masse (232). Le circuit ainsi réalisé se loge dans un boîtier de connecteur miniature dont la longueur maximale est inférieure à 30 mm, la largeur inférieure à 20 mm et l'épaisseur inférieure à 10 mm.

Les composants utilisés sont l'amplificateur LTC 2050 de la société "LINEAR TECHNOLOGY" et des résistances à 0,1% en précision et 10 ppm en dérive de la série RN73F1J de la société "MEGGIT".

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Connecteur miniature avec l'électronique embarquée pour thermocouple, **caractérisé en ce qu'**il est constitué d'un boîtier (6) dans lequel sont agencés :
- deux moyens de connexion (20,21) d'un thermocouple (1) à un circuit imprimé (4) reliant les éléments de l'électronique embarquée ;
- trois bornes de connexion (230, 231, 232) des circuits imprimés (4) à un câble (3) d'alimentation du connecteur et de transfert du signal mis en forme par l'électronique embarquée ;
- des moyens (24) de mesure de la température ambiante dans le connecteur disposés entre les deux moyens de connexion (20,21) du thermocouple ;
- des moyens (25, 26, 27, 29) d'amplification du signal délivré par le thermocouple (1) et de mise à l'échelle du signal délivré par le moyen de mesure de la température ambiante (24), ces moyens (25, 26, 27, 29) effectuant également la sommation de ces deux signaux ainsi que la linéarisation du signal résultant de cette sommation.

2. Connecteur selon la revendication 1, **caractérisé en ce que** les moyens de mise en forme sont constitués d'un amplificateur différentiel (25) à très faible valeur de compensation et très faible dérive dont chacune des entrées est reliée aux premier et second moyens de connexion (20, 21) et dont la sortie est reliée par le circuit imprimé (457) à une entrée d'un circuit de sommation (27) recevant sur son autre entrée la sortie d'un circuit de mise à l'échelle (26) du signal délivré par la sortie (24) du capteur de température ambiante, la sortie du circuit sommateur (27) étant reliée à l'entrée d'un circuit de linéarisation dont la sortie est reliée à l'une des bornes (231) de connexion du câble (3).

3. Connecteur selon la revendication 1 ou 2, **caractérisé en ce qu'**une deuxième borne (230) de connexion du câble est reliée à un régulateur (28) de tension qui alimente par les pistes (485, 486, 487, 489) les circuits (26, 27, 25, 29) embarqués dans le connecteur.

4. Connecteur selon l'une des revendications 1 à 3, **caractérisé en ce que** le boîtier (6) a une longueur inférieure à 30 mm, une largeur inférieure à 20 mm et une épaisseur inférieure à 10 mm.

5. Connecteur selon l'une des revendications 1 à 4, **caractérisé en ce que** le thermocouple de type K est constitué d'un fil d'alliage chromel (10) relié à un fil d'alliage alumel (11) pour constituer une soudure chaude (14), la liaison de ces deux fils, respectivement aux premier et second moyens de connexion (20, 21) avec le cuivre du circuit imprimé constitue une soudure froide (13).
